# EUROPEAN PATENT APPLICATION

(11) **EP 4 746 391 A1**
(43) Date of publication of application: **20.05.2026**
(21) Application number: 24919949.8
(22) Date of filing: 16.12.2024
(51) Int. Cl.: H04M 1/02

(54) **ELECTRONIC DEVICE**

(30) Priority: 25.01.2024 CN 202420191628 U
(71) Applicant: Huawei Technologies Co., Ltd., Shenzhen, Guangdong 518129 (CN)
(72) Inventor: ZHANG, Shijun, Shenzhen, Guangdong 518129 (CN); LI, Heng, Shenzhen, Guangdong 518129 (CN); LIU, Junyan, Shenzhen, Guangdong 518129 (CN); ZHANG, Yixuan, Shenzhen, Guangdong 518129 (CN)
(74) Representative: Gill Jennings & Every LLP
(86) International application number: PCT/CN2024/139772
(87) International publication number: WO 2025/156871

(57) **Abstract**

Embodiments of this application provide an electronic device, and belong to the field of electronic technologies. A telescopic conductive member is disposed between a housing and a flexible display of the electronic device, and two ends of the conductive member are electrically connected to the housing and the flexible display in a telescopic direction. The conductive member has a cavity, and the flexible display can drive the conductive member to extend or retract, and compress or expand the cavity. Reliable assembly and electrical connection between the flexible display and the housing can be implemented via the conductive member, and the conductive member imposes no reverse jacking force on the flexible display. This avoids a crack on the flexible display while ensuring stable conduction between the flexible display and the housing. In addition, in a scenario like a touch operation, when a conductive region that is on the flexible display and that corresponds to the conductive member is slid over, the flexible display drives the conductive member to retract and compress the cavity. For example, when the conductive member is compressed to an extreme extent, the cavity may be completely compressed, and the flexible display and the conductive member are stacked on the rigid housing, to significantly reduce a thickness, so that no obvious local protrusion, bulging, or the like is formed on the flexible display, and it is ensured that there is no obvious change in a tactile feeling.

## Description

This application claims priority to Chinese Patent Application No. 202420191628.3, filed with the China National Intellectual Property Administration on January 25, 2024 and entitled "ELECTRONIC DEVICE", which is incorporated herein by reference in its entirety.

### TECHNICAL FIELD

This application relates to the field of electronic technologies, and in particular, to an electronic device.

### BACKGROUND

A flexible display is a display that has flexibility and can be bent or folded, so that a more flexible and portable device can be produced. For example, with gradual maturity of flexible display technologies, a display manner of a terminal device changes greatly. One of changes is emergence of an electronic device like a foldable mobile phone or computer. This type of electronic device can flexibly change a switching mode based on different use scenarios, and has a high screen-to-body ratio and resolution, thus becoming one of popular products among people.

Currently, the electronic device includes a middle frame, the flexible display usually needs to be attached to the middle frame, and the middle frame provides a support and assembly place for the flexible display. To meet an electromagnetic compatibility requirement of the flexible display, a metal layer at the back (surface facing the middle frame) of the flexible display needs to be electrically connected to the middle frame. For example, conductive foam is disposed between the flexible display and the middle frame, and the flexible display and the middle frame are electrically connected via the conductive foam and are grounded together. The conductive foam is usually disposed between the flexible display and the middle frame after being compressed. The compressed conductive foam provides reverse jacking force for the flexible display, to ensure reliability of fastening, assembly, and electrical connection between the conductive foam and the flexible display.

However, the reverse jacking force of the conductive foam leads to local deformation of the flexible display, which causes the flexible display to be prone to a crack and affects flatness of the flexible display.

### SUMMARY

Embodiments of this application provide an electronic device. No reverse jacking force is imposed on a flexible display while it is ensured that a housing and the flexible display are reliably assembled and electrically connected, to reduce or avoid a crack on the flexible display, and improve flatness of the flexible display.

An embodiment of this application provides an electronic device, including a housing, a flexible display, and a telescopic conductive member. The flexible display is disposed on the housing. The conductive member is located between the housing and the flexible display, the conductive member has a first end and a second end that are opposite to each other in a telescopic direction, and the first end and the second end are electrically connected to the housing and the flexible display respectively, so that the flexible display can be electrically connected to the housing via the conductive member.

The conductive member has a cavity, the cavity is located between the first end and the second end, and the flexible display is configured to drive, via the second end, the conductive member to extend or retract, to compress or expand the cavity. For example, during actual assembly, the flexible display may be pressed in a thickness direction, so that the flexible display drives the second end of the conductive member to move toward the first end, and the conductive member retracts and compresses the cavity of the conductive member. When the conductive member is compressed to an extreme extent, the cavity inside the conductive member is completely compressed, and the flexible display and the conductive member are stacked on the rigid housing. The flexible display and the conductive member, and the conductive member and the housing may be in full contact and fastened, for example, fully squeezed and bonded by using conductive adhesive to implement electrical connection. When pressing on the flexible display is removed, the flexible display moves away from the housing, and drives the second end of the conductive member to move away from the first end, so that the conductive member extends and expands the cavity inside the conductive member. The fastening and the electrical connection between the flexible display and the conductive member and between the housing and the conductive member can still be ensured, so that stable assembly and electrical connection between the flexible display, the conductive member, and the housing are implemented, and reliability of fastening, assembly, and electrical connection between the flexible display and the housing is ensured. In addition, the conductive member imposes no reverse jacking force on the flexible display, that is, a crack on the flexible display is avoided while stable conduction between the flexible display and the housing is ensured, and flatness of the flexible display is significantly improved.

In addition, a vertical projection region of the conductive member on the flexible display in the thickness direction is used as a conductive region. In a scenario like performing a touch operation on the flexible display, for example, when a finger or a stylus slides over the conductive region on the flexible display, the flexible display drives, via the second end, the conductive member to retract and compress the cavity of the conductive member. For example, when the conductive member is compressed to an extreme extent, the cavity inside the conductive member may be completely compressed, and the flexible display and the conductive member are stacked on the rigid housing, to significantly reduce the thickness, so that no obvious local protrusion, bulging, or the like is formed on the flexible display, it can be ensured that there is no obvious change in a tactile feeling, and the tactile feeling of the touch operation is not affected. This resolves a problem of an abnormal change in the tactile feeling during the touch operation, and improves user experience.

In a possible implementation, a groove is disposed on a surface that is of the housing and that faces the flexible display, and the first end of the conductive member is disposed in the groove. In one aspect, the groove can facilitate assembly of the conductive member on the housing. In another aspect, in the scenario like the touch operation, for example, when the conductive member is in a retracted state due to extreme compression, at least a part of the conductive member may be accommodated in the groove, to reduce thickness space occupied by the conductive member at an upper part the housing (side facing the flexible display), further reduce or avoid problems such as the local protrusion and bulging on the flexible display, and ensure that the tactile feeling is not affected.

In a possible implementation, when the conductive member is in a retracted state, the first end of the conductive member is attached to the second end, and a surface that is of the second end and that faces away from the first end is aligned with the surface that is of the housing and that faces the flexible display. To be specific, when the conductive member is compressed to the extreme extent, a thickness of the conductive member fills a depth (thickness) of the groove, so that the surface that is of the second end and that faces away from the first end and the surface that is of the housing and that faces the flexible display basically form a plane that is not jacked up, and no local protrusion, bulging, or the like is formed on the flexible display, to ensure that the tactile feeling does not change, and further improve user experience.

In a possible implementation, the conductive member is of a ring-shaped structure having the cavity inside. A structure design is simple. This helps reduce molding difficulty and costs.

In a possible implementation, the conductive member includes a flexible conductive thin film, the conductive thin film encloses the cavity, a part of the conductive thin film forms the first end, and a part of the conductive thin film forms the second end. The conductive thin film is flexible, so that the conductive member can be bent, folded, or deformed under external force, for example, under driving of the flexible display, to implement extension and retraction of the conductive member, and lead to a change in a volume of the internal cavity during extension and retraction, so as to compress or expand the cavity.

In addition, a thickness of the conductive thin film is small, and when the formed conductive member is compressed to the extreme extent, the conductive member can be ultra-thin, to further ensure that no obvious protrusion, bulging, or the like is formed on the flexible display. This better helps resolves the problem of the abnormal change in the tactile feeling during the touch operation.

In a possible implementation, the conductive thin film has a head end and a tail end in an extension direction, and the head end and the tail end of the conductive thin film are connected to enclose the cavity. A molding manner is simple, an operation is convenient, and production is easy to implement.

In a possible implementation, a part that is of the conductive thin film and at which the head end and the tail end are connected is located at the first end or the second end of the conductive member. It may be understood that the first end and the second end of the conductive member are connected to the housing and the flexible display respectively. When the conductive member retracts, a part located between the first end and the second end of the conductive member is prone to deformation. The part that is of the conductive thin film and at which the head end and the tail end are connected is located at the first end or the second end of the conductive member, and the part between the head end and the tail end of the conductive thin film may form the part between the first end and the second end of the conductive member, so that deformation in a position at which the head end and the tail end of the conductive thin film are connected can be reduced or avoided, stability and reliability of connection between the head end and the tail end can be ensured, and problems such as disconnection caused by deformation at a joint between the head end and the tail end due to retraction of the conductive member can be reduced or avoided.

In a possible implementation, the head end and the tail end of the conductive thin film are at least partially stacked in the telescopic direction, so that there is a large contact area between the head end and the tail end. This helps improve the stability of the connection between the head end and the tail end of the conductive thin film, and improves reliability of the conductive member.

In a possible implementation, an overlapping region between the head end and the tail end is located at the first end of the conductive member, and vertical projection of the overlapping region between the head end and the tail end in the telescopic direction coincides with vertical projection of the second end of the conductive member in the telescopic direction. This reduces or avoids a thickness mismatch between film layers at a lower part of the second end (side facing away from the flexible display in the telescopic direction) of the conductive member, so that when the conductive member is compressed to the extreme extent, thicknesses of the film layers at the lower part of the second end of the conductive member are consistent, and the film layers are both film layers at which the head end and the tail end are stacked. This better helps ensure that the tactile feeling does not change when the conductive region is slid over by the touch operation, and improve user experience.

In a possible implementation, the electronic device further includes an adhesive layer, where the adhesive layer is located between the head end and the tail end, so that the head end and the tail end are fastened together via the adhesive layer.

In a possible implementation, the electronic device further includes a first conductive adhesive layer, where the first conductive adhesive layer is located between the first end of the conductive member and the housing, and the first end is electrically connected to the housing via the first conductive adhesive layer, to implement the fastening and the electrical connection between the housing and the conductive member.

The electronic device further includes a second conductive adhesive layer, where the second conductive adhesive layer is located between the second end of the conductive member and the flexible display, and the second end is electrically connected to the flexible display via the second conductive adhesive layer, to implement the fastening and the electrical connection between the flexible display and the conductive member. A connection structure is simple, is easy to implement, and has low costs.

In a possible implementation, the conductive thin film includes a conductive fabric and a metal thin film. The conductive member is formed by using a thin-layer structure like the conductive metal thin film or the conductive fabric. For example, the head end and the tail end of the metal thin film or the conductive fabric are connected to enclose the conductive member having the cavity inside, to meet requirements of extension and retraction and conduction of the conductive member. A structure design is simple and assembly is easy to implement, which helps improve assembly efficiency and reduce production costs.

In a possible implementation, the conductive thin film includes a flexible film layer and a conductive layer, the conductive layer is disposed on a surface that is of the flexible film layer and that faces away from the cavity, and the conductive layer extends from at least the first end to the second end of the conductive member. The conductive thin film is flexible. This can provide flexibility for the conductive thin film to implement extension and retraction of the conductive member. The conductive layer is conductive. This can provide electrical conductivity for the conductive thin film, so that the first end and the second end of the conductive member are electrically connected to the housing and the flexible display. A structure design of the conductive thin film is enriched, so that the conductive member has better structure flexibility, and this helps extend an application scope of the conductive member.

In a possible implementation, the conductive layer completely covers the surface that is of the flexible film layer and that faces away from the cavity. This keeps thicknesses of the entire conductive thin film consistent, and better helps implement effect that the tactile feeling does not change abnormally when the conductive region is slid over by the touch operation.

In a possible implementation, the conductive layer includes a conductive adhesive, a part of the conductive adhesive forms the first conductive adhesive layer, a part of the conductive adhesive forms the second conductive adhesive layer, and a part of the conductive adhesive forms the adhesive layer. To be specific, when the conductive member is formed by using the conductive thin film, the head end and the tail end of the conductive thin film may be bonded by using the conductive adhesive included in the conductive thin film, and the conductive member may also be directly bonded and fastened to the housing and the flexible display by using the conductive adhesive. There is no need to additionally dispose an adhesive layer and a conductive adhesive layer, a manner of forming and operating the conductive member is simple, forming difficulty and costs are low, and production is easy to implement.

In a possible implementation, the flexible film layer includes a conductive fabric, a metal thin film, and a polyimide film.

In a possible implementation, the conductive thin film located at the first end has a first through hole. For example, in an example in which the conductive thin film is a conductive fabric, the conductive fabric is woven by fibers, and there is a gap between the fibers, so that the conductive thin film at the first end of the conductive member has the first through hole.

The electronic device further includes a first anti-penetration layer, the first anti-penetration layer is disposed on a surface that is of the first end and that faces the cavity, and the first anti-penetration layer covers the first through hole. The first anti-penetration layer can prevent the first conductive adhesive layer and the adhesive layer from overflowing, via the first through hole, to a side that is of the first end and that faces the cavity, avoid a problem of bonding between the first end and the second end when the conductive member is compressed to the extreme extent, and improve the flatness of the flexible display.

In a possible implementation, the conductive thin film located at the second end has a second through hole. The electronic device further includes a second anti-penetration layer, the second anti-penetration layer is disposed on a surface that is of the second end and that faces the cavity, and the second anti-penetration layer covers the second through hole. The second anti-penetration layer can prevent the second conductive adhesive layer from overflowing, via the second through hole, to a side that is of the second end and that faces the cavity, and can also avoid the problem of bonding between the first end and the second end when the conductive member is compressed to the extreme extent.

In a possible implementation, the housing includes at least a first middle frame and a second middle frame. The electronic device further includes a hinge component, the first middle frame and the second middle frame are located on two sides of the hinge component, and the first middle frame and the second middle frame are rotatably connected via the hinge component, so that the first middle frame and the second middle frame can rotate relative to each other, that is, the housing can be folded or unfolded. The flexible display is disposed on a side surface of the first middle frame, the second middle frame, and the hinge component, and the flexible display may be folded or unfolded as the housing moves, so that the electronic device can switch between a folded state and an unfolded state.

### BRIEF DESCRIPTION OF DRAWINGS

FIG. 1 is a diagram of a structure of an electronic device in a folded state according to an embodiment of this application;
FIG. 2 is a diagram of a structure of the electronic device shown in FIG. 1 in an intermediate state;
FIG. 3 is a diagram of a structure of the electronic device shown in FIG. 1 in an unfolded state;
FIG. 4 is a diagram of a split structure of the electronic device shown in FIG. 1;
FIG. 5 is a diagram of a partial cross-sectional structure of an electronic device according to an embodiment of this application;
FIG. 6 is a diagram of a structure of a conductive member according to an embodiment of this application;
FIG. 7 is a top view of a conductive thin film according to an embodiment of this application;
FIG. 8 is a cross-sectional diagram of a conductive member according to an embodiment of this application;
FIG. 9 is a diagram of a cross-sectional structure of another conductive member according to an embodiment of this application;
FIG. 10 is a diagram of a cross-sectional structure of still another conductive member according to an embodiment of this application; and
FIG. 11 is a diagram of a cross-sectional structure of yet another conductive member according to an embodiment of this application.

Descriptions of reference numerals:
100: electronic device;
10: housing;
   101: middle frame; 101a: first middle frame; 101b: second middle frame;
   11: groove;
20: flexible display;
30: hinge component;
40: rear cover;
50: conductive member; 50a: first end; 50b: second end; 51: cavity;
   52: conductive thin film; 52a: head end; 52b: tail end;
   521: flexible film layer; 522: conductive layer;
53: adhesive layer;
54: first conductive adhesive layer;
55: second conductive adhesive layer;
56: first anti-penetration layer; and
57: second anti-penetration layer.

### DESCRIPTION OF EMBODIMENTS

Terms used in implementations of this application are only used to explain specific embodiments of this application, but are not intended to limit this application.

Embodiments of this application provide an electronic device. The electronic device has a flexible display. For example, the electronic device may be an electronic device whose screen is foldable, for example, the foldable electronic device may include but is not limited to a mobile phone, a tablet computer, a notebook computer, an ultra-mobile personal computer (ultra-mobile personal computer, UMPC for short), a handheld computer, a touch television, a walkie-talkie, a netbook, a POS machine, a personal digital assistant (personal digital assistant, PDA for short), a wearable device, a virtual reality device, a vehicle-mounted device, or another foldable fixed terminal or mobile terminal.

Certainly, in some examples, the electronic device may alternatively be an electronic device whose screen cannot be folded, for example, may be a bar-type mobile phone with a flexible display or a notebook computer or a tablet computer with a flexible display.

In a scenario in which the electronic device is a foldable electronic device, the electronic device may be a foldable device with an outwardly foldable screen, or the electronic device may be a foldable device with an inwardly foldable screen, or the electronic device may be a foldable device in which a part of a screen is folded inward and a part of the screen is folded outward, or the electronic device may be a foldable device with an inwardly foldable screen and an additional external screen.

In embodiments of this application, an example in which the electronic device is a foldable mobile phone with an outwardly foldable screen is used for description.

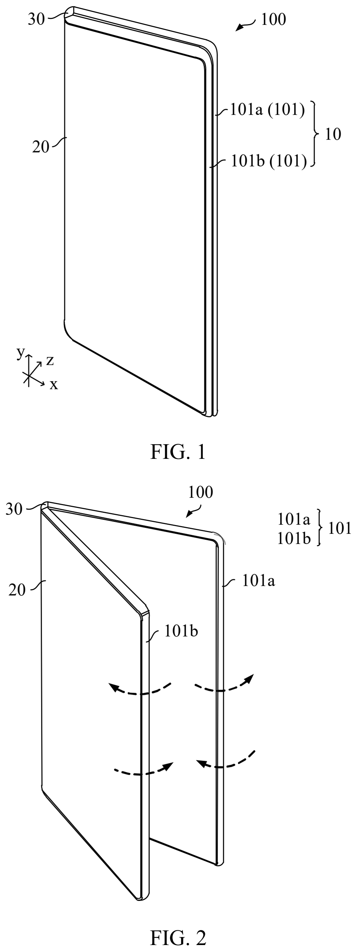

FIG. 1 is a diagram of a structure of an electronic device in a folded state according to an embodiment of this application.

Refer to FIG. 1. The electronic device 100 may include a housing 10 and a flexible display 20. The flexible display 20 is assembled on the housing 10, the flexible display 20 and the housing 10 may enclose accommodation space, and the accommodation space may be used to assemble and accommodate functional components of the electronic device 100.

For example, the flexible display 20 may be located on a surface of a side of the housing 10. The flexible display 20 is a display of the electronic device 100, is configured to display an image, text, a video, and the like, and provide an interaction interface and the like for a user. A surface that is of the flexible display 20 and that faces away from the housing 10 may be used as a display surface of the electronic device 100.

The flexible display 20 is a display that has flexibility. Flexibility (flexible) may also be interpreted as flexibility, and means that an object is prone to deformation after being subject to force, so that the object can be freely bent, wound, or folded. The flexible display 20 may be but is not limited to an organic light-emitting diode (organic light-emitting diode, OLED for short) display, an active-matrix organic light-emitting diode (active-matrix organic light-emitting diode, AMOLED for short) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED for short) display, or the like.

The housing 10 may include a plurality of middle frames 101. For example, there are two middle frames 101, for example, a first middle frame 101a and a second middle frame 101b. The electronic device 100 further includes a hinge component 30, the first middle frame 101a and the second middle frame 101b may be located on two sides of the hinge component 30, and the first middle frame 101a and the second middle frame 101b are separately connected to the hinge component 30.

The hinge component 30 may be a structural component configured to connect the two middle frames 101 and allow the two middle frames 101 to rotate relative to each other. Rotatable fit between the first middle frame 101a and the second middle frame 101b can be implemented via the hinge component 30, so that the first middle frame 101a and the second middle frame 101b can rotate relative to each other, the housing 10 can be folded or unfolded, the flexible display 20 can be folded or unfolded as the housing 10 moves, and the electronic device 100 switches between a folded state and an unfolded state.

The flexible display 20 may be disposed on the hinge component 30 and the middle frame 101. For example, the flexible display 20 may be located on a same side surface of the first middle frame 101a, the second middle frame 101b, and the hinge component 30, a part that is of the flexible display 20 and that is opposite to the first middle frame 101a may be laid flat on the first middle frame 101a, and a part that is of the flexible display 20 and that is opposite to the second middle frame 101b may be laid flat on the second middle frame 101b.

The first middle frame 101a and the second middle frame 101b can be folded relative to each other to a closed state. Refer to FIG. 1. For example, when the first middle frame 101a and the second middle frame 101b are in the closed state, the first middle frame 101a and the second middle frame 101b can be completely closed to be parallel to each other (a slight deviation is allowed). In this case, the entire electronic device 100 is in the closed state, which is also referred to as the folded state. A part that is of the flexible display 20 and that is opposite to the hinge component 30 is bent and is in the folded state.

FIG. 2 is a diagram of a structure of the electronic device shown in FIG. 1 in an intermediate state.

Refer to FIG. 2. The first middle frame 101a and the second middle frame 101b can rotate relative to each other (folded or unfolded) to the intermediate state, so that the electronic device 100 is in the intermediate state. The part that is of the flexible display 20 and that is opposite to the hinge component 30 is also folded or unfolded to the intermediate state.

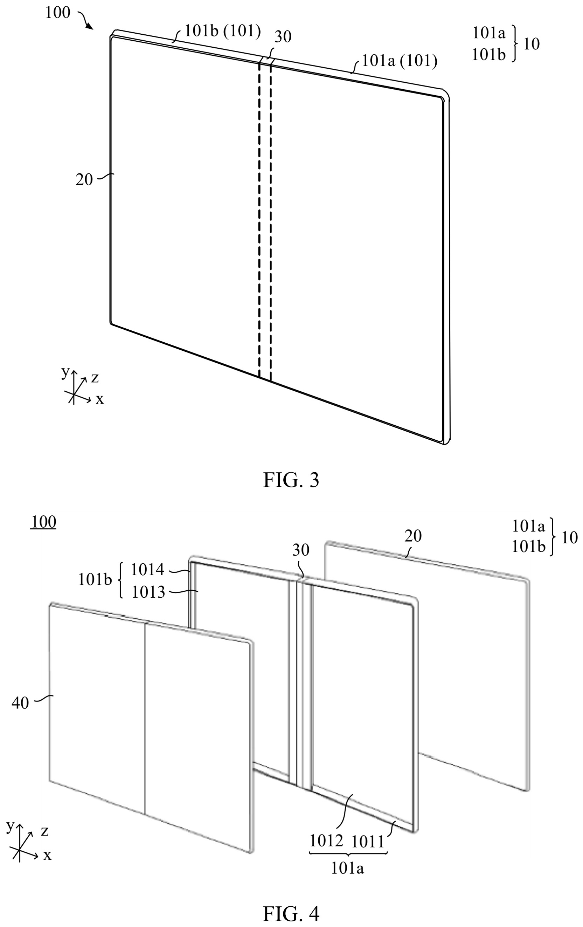

FIG. 3 is a diagram of a structure of the electronic device shown in FIG. 1 in the unfolded state.

Refer to FIG. 3. The first middle frame 101a and the second middle frame 101b can be unfolded relative to each other to an open state. For example, the first middle frame 101a and the second middle frame 101b are in the open state, an unfolded angle between the first middle frame 101a and the hinge component 30 and an unfolded angle between the hinge component 30 and the second middle frame 101b may be approximately 180°, and the entire electronic device 100 is in the open state, which is also referred to as the unfolded state. The part that is of the flexible display 20 and that is opposite to the hinge component 30 is also opened and unfolded. In other words, the entire flexible display 20 may be unfolded into a plane approximately 180°.

It should be noted that a slight deviation is allowed in the angle described in the example in this embodiment of this application. For example, the unfolded angle (or unfolded angle of the flexible display 20) of the electronic device 100 shown in FIG. 3 may be 180°, or may be approximately 180°, for example, 170°, 175°, 185°, or 190°. An angle described in the following example can be understood in a same way.

The intermediate state shown in FIG. 2 may be any state between the folded state and the unfolded state. In other words, the housing 10 and the flexible display 20 of the electronic device 100 may switch between the unfolded state (namely, the open state) and the folded state (namely, the closed state) through movement of the hinge component 30, to implement opening and closing of the electronic device 100.

For example, when the electronic device 100 is in the unfolded state, the first middle frame 101a and the second middle frame 101b rotate toward each other and are folded relative to each other, so that the electronic device 100 can switch from the unfolded state to the folded state (or intermediate state). When the electronic device 100 is in the folded state, the first middle frame 101a and the second middle frame 101b rotate away from each other and are unfolded relative to each other, so that the electronic device 100 can switch from the folded state to the unfolded state (or intermediate state).

For example, for a foldable electronic device with an outwardly foldable screen, the flexible display 20 may be disposed on outer surfaces of the first middle frame 101a, the second middle frame 101b, and the hinge component 30. For a foldable electronic device with an inwardly foldable screen, the flexible display 20 may be disposed on inner surfaces of the first middle frame 101a, the second middle frame 101b, and the hinge component 30.

When the electronic device 100 is in the folded state, two adjacent and opposite surfaces of the first middle frame 101a and the second middle frame 101b may be the inner surfaces of the first middle frame 101a and the second middle frame 101b respectively, a surface that is of the hinge component 30 and that is located on a same side as the inner surfaces of the first middle frame 101a and the second middle frame 101b is the inner surface of the hinge component 30. Two surfaces that are of the first middle frame 101a and the second middle frame 101b and that are away from each other are the outer surfaces of the first middle frame 101a and the second middle frame 101b respectively, a surface that is of the hinge component 30 and that is located on a same side as the outer surfaces of the first middle frame 101a and the second middle frame 101b is the outer surface of the hinge component 30.

For example, the middle frame 101 may be of a rectangular flat plate-shaped structure. In this embodiment of this application, as shown in FIG. 3, a width direction of the middle frame 101 (for example, the first middle frame 101a) is an x direction, a length direction of the middle frame 101 is a y direction, and a thickness direction of the middle frame 101 is a z direction. It may be understood that the length, the width, and the thickness in this embodiment of this application are merely for ease of description, and do not mean any limitation on a size. For example, the length may be greater than, equal to, or less than the width. It may be understood that, when the foldable electronic device 100 is in the folded state or the unfolded state, a length direction, a width direction, and a thickness direction of the electronic device 100 may be correspondingly consistent with the length direction, the width direction, and the thickness direction of the middle frame 101.

Certainly, in some other examples, the middle frame 101 may alternatively be of a flat plate-shaped structure in a shape like a square, a circle, an ellipse, or a rounded rectangle.

It should be noted that the electronic device 100 may include only two middle frames 101. For example, there may be one first middle frame 101a and one second middle frame 101b, so that the electronic device 100 is in the folded state, and the first middle frame 101a and the second middle frame 101b are folded relative to each other into two layers. For example, refer to FIG. 1. The electronic device 100 includes one first middle frame 101a, one second middle frame 101b, and one hinge component 30, and the first middle frame 101a and the second middle frame 101b are rotatably connected via the hinge component 30. When the first middle frame 101a and the second middle frame 101b are folded relative to each other and are in the folded state, the electronic device 100 is in a form in which the two layers of the middle frames 101 are stacked.

Alternatively, the electronic device 100 may include a plurality of middle frames 101. For example, there may be a plurality of first middle frames 101a, a plurality of second middle frames 101b, and a plurality of hinge components 30, and the first middle frame 101a and the second middle frame 101b that are adjacent to each other may be connected via one hinge component 30, so that the electronic device 100 may be folded into a multi-layer form. For example, the electronic device 100 may include two first middle frames 101a, one second middle frame 101b, and two hinge components 30. The two first middle frames 101a are located on two sides of the second middle frame 101b, and each of the two first middle frames 101a is rotatably connected to the second middle frame 101b via one hinge component 30. One first middle frame 101a may be folded relative to the second middle frame 101b, and the other first middle frame 101a may also be folded relative to the second middle frame 101b, so that the electronic device 100 is in the folded state, and the first middle frame 101a and the second middle frame 101b are folded relative to each other to form a form in which three layers of the middle frames 101 are stacked. When one first middle frame 101a and the second middle frame 101b is unfolded relative to each other to the unfolded state, the electronic device 100 is in the unfolded state.

It may be understood that, in some other examples, for example, in the foldable electronic device 100 with three middle frames, the flexible display 20 is disposed on the two first middle frames 101a, the second middle frame 101b, and the hinge component 30, a part of the flexible display 20 may be located on inner surfaces of one first middle frame 101a, one hinge component 30, and the second middle frame 101b, and a part of the flexible display 20 may be located on an outer surface of the other first middle frame 101a.

In this embodiment of this application, an example in which the electronic device 100 includes two middle frames: the first middle frame 101a and the second middle frame 101b, and the first middle frame 101a and the second middle frame 101b implement rotatable fit via one hinge component 30 is used for description.

In some other examples, the foldable electronic device 100 may alternatively be a notebook computer. The notebook computer may include the first middle frame 101a and the second middle frame 101b. The first middle frame 101a and the second middle frame 101b can be folded relative to each other to a closed state, so that the notebook computer is in the closed state (namely, a folded state). Correspondingly, the first middle frame 101a and the second middle frame 101b are unfolded relative to each other from the folded state to an unfolded state, and the notebook computer is in an open state (namely, the unfolded state). In the unfolded state, at least a part of the flexible display on the first middle frame 101a may be used to display an image and the like, and at least a part of the flexible display on the second middle frame 101b may be used as a virtual keyboard and the like.

FIG. 4 is a diagram of a split structure of the electronic device shown in FIG. 1.

Refer to FIG. 4. The housing 10 may further include a rear cover 40. The flexible display 20 and the rear cover 40 may be located on two opposite sides of the middle frame 101 and the hinge component 30 in the thickness direction (z direction) respectively. The rear cover 40, the flexible display 20, and the middle frame 101 jointly enclose the accommodation space.

The rear cover 40 may be used as an appearance cover at the back of the electronic device 100, to protect the functional components (for example, a circuit board and a battery) inside the electronic device 100 and improve aesthetics of the electronic device 100.

The middle frame 101 may include a middle plate and a bezel. For example, the first middle frame 101a may include a first middle plate 1012 and a first bezel 1011, and the first bezel 1011 is disposed around an outer peripheral edge of the first middle plate 1012. The second middle frame 101b may also include a second middle plate 1013 and a second bezel 1014, and the second bezel 1014 is disposed around an outer peripheral edge of the second middle plate 1013. The hinge component 30 may be separately connected to the first middle plate 1012 and the second middle plate 1013.

The flexible display 20 is disposed on the middle frame 101. For example, a part of the flexible display 20 may be fastened to the bezel, and a part of the flexible display 20 may be fastened to the middle plate.

It should be noted that the middle plate and the bezel may be separately formed, and the middle plate and the bezel may be fastened and assembled together through welding, clamping, bonding, or the like. Alternatively, the middle plate and the bezel may be integrally formed.

A molding material of the middle frame 101 may include metal. Certainly, in some examples, the molding material of the middle frame 101 may alternatively include ceramic, glass, and the like.

The electronic device 100 may further include a circuit board, a battery, a charging management module, a power management module, and the like (not shown in the figure). The circuit board, the battery, the charging management module, the power management module, and the like may be fastened in the accommodation space.

The circuit board may include a processor. The processor may include an application processor (application processor, AP for short), a modem processor, a graphics processing unit (graphics processing unit, GPU for short), an image signal processor (image signal processor, ISP for short), a controller, a video codec, a digital signal processor (digital signal processor, DSP for short), a baseband processor, a display processing unit (display processing unit, DPU for short), a neural-network processing unit (neural-network processing unit, NPU for short), and/or the like. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data.

The processor may include one or more interfaces. The interface may be configured to connect to a charger to charge the electronic device 100. The interface may also be configured to implement data transmission between the electronic device 100 and an external device, for example, may also be configured to connect to a headset, a projection apparatus, or the like.

The charging management module is configured to receive a charging input from a charger. The charger may be a wireless charger or a wired charger. In some examples of wired charging, the charging management module may receive a charging input of a wired charger through a port. In some embodiments of wireless charging, the charging management module may receive a wireless charging input through a wireless charging coil of the electronic device 100. The charging management module can charge the battery, and may further supply power to the electronic device 100 by using the power management module.

The power management module is configured to connect to the battery, the charging management module, and the processor. The power management module receives an input of the battery and/or the charging management module, to supply power to the processor, a memory, a display, a camera module, and the like. The power management module may be configured to monitor parameters such as a battery capacity, a battery cycle count, and a battery health status (electric leakage or impedance).

In some examples, the power management module may be disposed in the processor of the circuit board. In some other examples, the power management module and the charging management module may alternatively be disposed in a same device.

The structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. For example, the electronic device 100 may further include components such as a communication module, a camera module (for example, a front-facing camera and a rear-facing camera), a microphone, a speaker, and a flash.

A surface that is of the flexible display 20 and that faces the housing 10 has a metal layer. The flexible display 20 needs to be electrically connected to a metal structure of the housing 10 via the metal layer, and is grounded together with the housing 10, to meet an electromagnetic compatibility requirement of the flexible display 20. For example: The metal layer of the flexible display 20 may be electrically connected to the metal middle frame 101 of the housing 10, to implement electrical connection between the flexible display 20 and the housing 10.

In some examples, the flexible display may be electrically connected to the middle frame of the housing via conductive foam. For example, the conductive foam is disposed between the flexible display and the middle plate of the housing, and two ends of the conductive foam may be electrically connected to the flexible display and the middle plate respectively by using conductive adhesive, so that the flexible display is electrically connected to the middle plate. To ensure stable conduction between the flexible display and the conductive foam, during actual assembly, the conductive foam needs to be compressed and then disposed on a surface that is of the middle plate and that faces the flexible display, and then the flexible display is laid on the compressed conductive foam. Rebound force of the conductive foam forms reverse jacking force on the flexible display, to ensure fastening and stability of electrical connection between the conductive foam and the flexible display.

However, the reverse jacking force of the conductive foam on the flexible display is likely to cause local deformation of the flexible display, which causes a crack on the flexible display and affects flatness of the flexible display. In addition, a vertical projection region (in the thickness direction) of the conductive foam on the flexible display is used as a conductive region. In a scenario like performing a touch operation on the flexible display, when a finger or a stylus slides over the conductive region on the flexible display, the conductive foam is compressed. Even if the conductive foam is in extreme compression, that is, the conductive foam can be compressed to an extreme extent, a thickness of the conductive foam is large, and problems such as obvious local protrusion, bulging, or the like are formed on the conductive region, which affects a tactile feeling and reduces user experience.

In view of this, embodiments of this application provide an electronic device. A telescopic conductive member is disposed between a housing and a flexible display, and two opposite ends of the conductive member in a telescopic direction are electrically connected to the housing and the flexible display respectively. The conductive member has a cavity, and the flexible display can drive the conductive member to extend or retract, and compress or expand the cavity. During actual assembly, the flexible display may be pressed, so that the flexible display drives a second end of the conductive member to move toward a first end, and the conductive member retracts and compresses the cavity of the conductive member. When the conductive member is compressed to an extreme extent, the cavity inside the conductive member is completely compressed, and the flexible display and the conductive member, and the conductive member and the housing may be in full contact and fastened, for example, fully squeezed and bonded by using conductive adhesive to implement electrical connection. When pressing on the flexible display is removed, the flexible display moves away from the housing, and drives the second end of the conductive member to move away from the first end, so that the conductive member extends and expands the cavity. Fastening and electrical connection between the flexible display, the conductive member, and the housing can still be ensured, so that stable assembly and electrical connection between the flexible display and the housing are implemented. In addition, the conductive member imposes no reverse jacking force or the like on the flexible display, that is, a crack on the flexible display is avoided while stable conduction between the flexible display and the housing is ensured, and flatness of the flexible display is improved.

In addition, in a scenario like performing a touch operation on the flexible display, when a finger or a stylus slides over a conductive region that is on the flexible display and that corresponds to the conductive member, the flexible display drives the conductive member to retract and compress the cavity. For example, when the conductive member is compressed to the extreme extent, the cavity may be completely compressed, and the flexible display and the conductive member are stacked on the rigid housing, to significantly reduce a thickness, so that no obvious local protrusion, bulging, or the like is formed on the flexible display, it is ensured that there is no obvious change in a tactile feeling, a problem like an abnormal change in the tactile feeling during the touch operation is resolved, and user experience is improved.

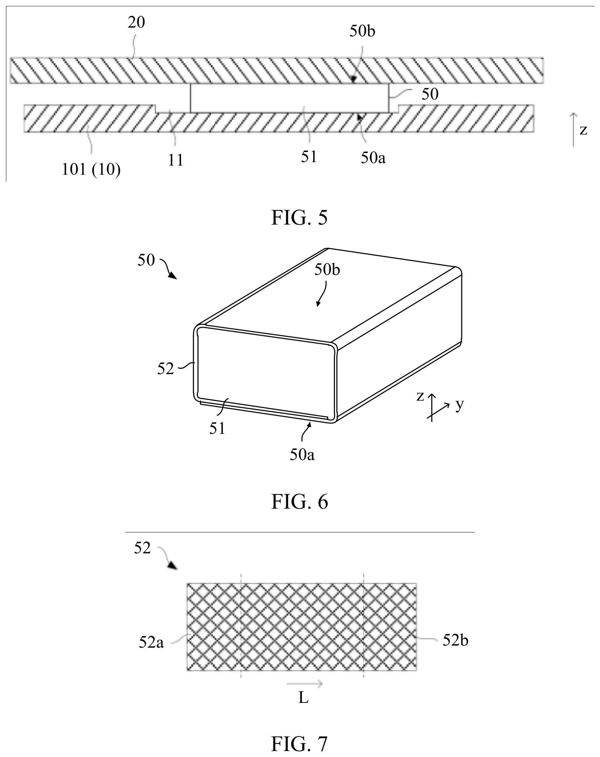

FIG. 5 is a diagram of a partial cross-sectional structure of an electronic device according to an embodiment of this application.

Refer to FIG. 5. The electronic device 100 includes a housing 10, a flexible display 20, and a conductive member 50. The conductive member 50 is a conductive structural member that allows a current to pass through. For example, a molding material of the conductive member 50 may include a conductive material like metal.

The conductive member 50 is located between the flexible display 20 and the housing 10. For example, the conductive member 50 may be disposed between the flexible display 20 and a metal structure of the housing 10. For example, the conductive member 50 may be disposed between the flexible display 20 and a middle plate of a middle frame 101. A surface that is of the flexible display 20 and that faces the housing 10 has a metal layer (not shown in the figure). The metal layer of the flexible display 20 may be electrically connected to the metal structure of the housing 10 via the conductive member 50, to implement conduction between the flexible display 20 and the housing 10. For example, the flexible display 20 may be grounded via the metal structure of the housing 10, to meet an electromagnetic compatibility requirement of the flexible display 20.

The conductive member 50 is telescopic. It may be understood that, as shown in FIG. 5, the flexible display 20 may be located on a side of the housing 10 in a thickness direction (z direction), and a telescopic direction of the conductive member 50 may be consistent with the thickness direction, for example, the z direction shown in FIG. 5.

Two opposite ends of the conductive member 50 in the telescopic direction (z direction) may be a first end 50a and a second end 50b respectively. The first end 50a and the second end 50b may be electrically connected to the housing 10 and the flexible display 20 respectively. For example, an end surface of the first end 50a of the conductive member 50 may be fastened to and electrically connected to the housing 10 via a first conductive adhesive layer (not shown in the figure), and an end surface of the second end 50b of the conductive member 50 may also be fastened to and electrically connected to the flexible display 20 via a second conductive adhesive layer (not shown in the figure).

The conductive member 50 may further have a cavity 51. For example, as shown in FIG. 5, the conductive member 50 may be of a hollow structure inside, so that the conductive member 50 has the cavity 51 inside, and the cavity 51 can be compressed or expanded as the conductive member 50 extends or retracts. For example, the flexible display 20 may act on the second end 50b of the conductive member 50, to drive the second end 50b to move toward or away from the first end 50a, thereby implementing extension and retraction of the conductive member 50, and compressing or expanding the cavity 51 between the first end 50a and the second end 50b.

In this embodiment of this application, when the conductive member 50 is compressed to an extreme extent, that is, the conductive member 50 is compressed to a maximum extent, the conductive member 50 is in a retracted state, the first end 50a and the second end 50b of the conductive member 50 may be attached to each other, and there is no gap between the first end 50a and the second end 50b, so that the cavity 51 inside the conductive member 50 is completely compressed.

For example, during actual assembly, the conductive member 50 is fastened between the housing 10 and the flexible display 20, the first conductive adhesive layer (not shown in the figure) may be disposed between the end surface of the first end 50a of the conductive member 50 and the housing 10, and the second conductive adhesive layer (not shown in the figure) may be disposed between the end surface of the second end 50b of the conductive member 50 and the flexible display 20. The flexible display 20 may be pressed in the thickness direction (z direction), so that the flexible display 20 drives the second end 50b of the conductive member 50 to move toward the first end 50a, and the conductive member 50 retracts and compresses the cavity 51. When the conductive member 50 is compressed to the extreme extent, the cavity 51 inside the conductive member 50 is completely compressed, so that the flexible display 20, the conductive member 50, and the housing 10 can be in full contact and fastened. For example, the flexible display 20, the second conductive adhesive layer, the conductive member 50, and the first conductive adhesive layer are sequentially stacked on the rigid housing 10. The flexible display 20 and the conductive member 50 can be fully squeezed and bonded to the second conductive adhesive layer to implement electrical connection, and the housing 10 and the conductive member 50 can also be fully squeezed and bonded to the first conductive adhesive layer to implement electrical connection.

When pressing on the flexible display 20 is removed, the flexible display 20 moves away from the housing 10 to reset, the flexible display 20 and the second end 50b of the conductive member 50 are bonded and fastened together via the second conductive adhesive layer, and the flexible display 20 drives the second end 50b of the conductive member 50 to move away from the first end 50a, so that the conductive member 50 extends and expands the cavity 51. Fastening and electrical connection between the flexible display 20 and the conductive member 50 and between the housing 10 and the conductive member 50 can still be ensured, so that stable assembly and electrical connection between the flexible display 20, the conductive member 50, and the housing 10 are implemented, and reliability of fastening, assembly, and electrical connection between the flexible display 20 and the housing 10 is ensured. In addition, the conductive member 50 imposes no reverse jacking force on the flexible display 20, that is, a crack on the flexible display 20 is avoided while stable conduction between the flexible display 20 and the housing 10 is ensured, and flatness of the flexible display 20 is significantly improved.

In addition, a vertical projection region of the conductive member 50 on the flexible display 20 in the thickness direction is used as a conductive region. In a scenario like performing a touch operation on the flexible display 20, for example, when a finger or a stylus slides over the conductive region on the flexible display 20, the flexible display 20 drives, via the second end 50b, the conductive member 50 to retract and compress the cavity 51. For example, when the conductive member 50 is compressed to the extreme extent, the cavity 51 inside the conductive member 50 is completely compressed, and the flexible display 20 and the conductive member 50 are stacked on the rigid housing 10, to significantly reduce the thickness, so that no obvious local protrusion, bulging, or the like is formed on the flexible display 20, and it can be ensured that there is no obvious change in a tactile feeling, that is, it is ensured that the tactile feeling of the touch operation is not affected. This resolves a problem of an abnormal change in the tactile feeling during the touch operation, and improves user experience.

To further improve the tactile feeling of performing an operation, as shown in FIG. 5, in some examples, a groove 11 may be disposed on a surface that is of the housing 10 and that faces the flexible display 20, and the first end 50a of the conductive member 50 may be disposed in the groove 11. In one aspect, the groove 11 may facilitate assembly of the conductive member 50 on the housing 10.

In another aspect, in the scenario like the touch operation, for example, when the conductive member 50 is in the retracted state due to extreme compression, at least a part of the conductive member 50 may be accommodated in the groove 11, to reduce thickness space occupied by the conductive member 50 at an upper part the housing 10 (side facing the flexible display 20), further reduce or avoid problems such as the local protrusion and bulging on the flexible display 20, and ensure that the tactile feeling is not affected.

For example, when the conductive member 50 is in the retracted state, a surface that is of the second end 50b of the conductive member 50 and that faces away from the first end 50a may be aligned with the surface that is of the housing 10 and that faces the flexible display 20, that is, when the conductive member 50 is compressed to the extreme extent, a thickness (distance between the first end 50a and the second end 50b) of the conductive member 50 fills a depth (thickness) of the groove 11, so that the surface that is of the second end 50b and that faces away from the first end 50a and the surface that is of the housing 10 and that faces the flexible display 20 basically form a plane that is not jacked up, and no local protrusion, bulging, or the like is formed on the flexible display 20, to ensure that the tactile feeling does not change, and further improve user experience.

FIG. 6 is a diagram of a structure of a conductive member according to an embodiment of this application.

Refer to FIG. 6. The conductive member 50 may be of a ring-shaped structure, and the ring-shaped conductive member 50 has the cavity 51 inside. It may be understood that, as shown in FIG. 6, a cross section of the conductive member 50 may be a closed ring, and the cavity 51 inside the conductive member 50 has a continuous cavity wall in a circumferential direction. For example, an overall extension direction of the conductive member 50 is parallel to a length direction of the electronic device 100, for example, a y direction in the figure. In the y direction, there may be openings on two opposite sides of the cavity 51.

For example, the cross section of the conductive member 50 may be in a regular or irregular shape like a circular ring, a rectangular ring, a rounded rectangular ring, an elliptical ring, or a trapezoidal ring.

Certainly, in some examples, the cross section of the conductive member 50 may alternatively be a non-closed ring. For example, the cross section of the conductive member 50 may be a semicircular ring, a U-shaped ring, or the like.

The following describes the conductive member 50 in detail by using an example in which the cross section of the conductive member 50 is of the closed ring-shaped structure.

In some examples, the conductive member may include a flexible conductive thin film, and the conductive thin film may be used to enclose a conductive member having the cavity inside.

For example, as shown in FIG. 6, the conductive member 50 includes a conductive thin film 52. The conductive thin film 52 may enclose the conductive member 50 having the cavity 51 inside. The conductive thin film 52 may form the cavity wall of the cavity 51. A part of the conductive thin film 52 forms the first end 50a of the conductive member 50, and a part of the conductive thin film 52 forms the second end 50b of the conductive member 50.

The conductive thin film 52 is flexible, and the enclosed conductive member 50 is hollow with the cavity 51 inside, so that the conductive member 50 can be deformed like be bent or folded under external force, for example, under driving of the flexible display 20, to implement extension and retraction of the conductive member 50. For example, the second end 50b and the first end 50a of the conductive member 50 may move relative to each other, to implement extension and retraction of the conductive member 50. In addition, when the conductive member 50 is retracted, a volume of the internal cavity 51 changes, to compress or expand the cavity 51.

The conductive thin film 52 is used to form the conductive member 50 having the cavity 51 inside. A thickness of the conductive thin film 52 is small, and when the formed conductive member 50 is compressed to the extreme extent, the conductive member 50 can be ultra-thin, to further ensure that no obvious protrusion, bulging, or the like is formed on the flexible display 20. This better helps resolves the problem of the abnormal change in the tactile feeling during the touch operation.

For example, the thickness of the conductive thin film 52 may be 0.02 mm to 0.2 mm. This helps implement ultra-thinness of the conductive member 50 when the conductive member 50 is compressed to the extreme extent, and ensures that the tactile feeling is not affected.

In some examples, when the conductive thin film 52 is formed, the conductive member 50 having the cavity 51 inside may be integrally formed.

Alternatively, in some examples, the conductive thin film 52 may be first formed through molding, and then the conductive thin film 52 is used to enclose the conductive member 50 having the cavity 51 inside.

FIG. 7 is a top view of a conductive thin film according to an embodiment of this application.

For example, refer to FIG. 7. Before the conductive member 50 is formed, a shape of an edge contour of the conductive thin film 52 may be a rectangle, and the conductive member 50 may be enclosed by using the conductive thin film 52.

For example, an extension direction of the conductive thin film 52 is parallel to a length direction of the rectangular conductive thin film 52, for example, an L direction shown in FIG. 7. In the extension direction, the conductive thin film 52 may have a head end 52a and a tail end 52b, and dashed lines shown in FIG. 7 are used as broken lines. The rectangular conductive thin film 52 is folded, and the head end 52a and the tail end 52b of the conductive thin film 52 are connected together, so that the conductive member 50 having the cavity 51 inside can be enclosed (as shown in FIG. 6). A molding manner is simple, an operation is convenient, and production is easy to implement.

Certainly, in some other examples, before the conductive member 50 is enclosed, the edge contour shape of the conductive thin film 52 may alternatively be in a regular or irregular shape like a trapezoid, an ellipse, or a circle.

It may be understood that the first end 50a and the second end 50b of the conductive member 50 are connected to the housing 10 and the flexible display 20 respectively. When the conductive member 50 retracts, a part located between the first end 50a and the second end 50b of the conductive member 50 is prone to deformation. Therefore, when the conductive member 50 is enclosed by using the conductive thin film 52, a part that is of the conductive thin film 52 and at which the head end 52a and the tail end 52b are connected may be enabled to be located at the first end 50a or the second end 50b of the conductive member 50, and the part between the head end 52a and the tail end 52b of the conductive thin film 52 may form the part between the first end 50a and the second end 50b of the conductive member 50, so that deformation in a position at which the head end 52a and the tail end 52b of the conductive thin film 52 are connected can be reduced or avoided, stability and reliability of connection between the head end 52a and the tail end 52b can be ensured, and problems such as disconnection caused by deformation at a joint between the head end 52a and the tail end 52b due to retraction of the conductive member 50 can be reduced or avoided.

For example, the part at which the head end 52a and the tail end 52b of the conductive thin film 52 are connected may be located at the first end 50a of the conductive member 50, that is, the part at which the head end 52a and the tail end 52b are connected is located at an end at which the conductive member 50 is fastened to the housing 10. This avoids that the flexible display 20 is jacked up due to different thicknesses of the connection part of the head end 52a and the tail end 52b, and further helps improve the flatness of the flexible display 20.

Certainly, in some examples, the part at which the head end 52a and the tail end 52b of the conductive thin film 52 are connected may alternatively be located at the second end 50b of the conductive member 50.

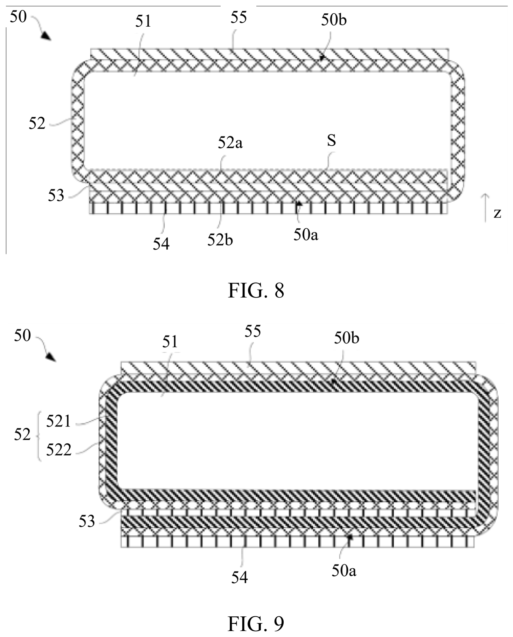

FIG. 8 is a cross-sectional diagram of a conductive member according to an embodiment of this application. FIG. 8 shows a surface formed by cutting the conductive member 50 along a surface parallel to the thickness direction (z direction).

In some examples, the head end 52a and the tail end 52b of the conductive thin film 52 may be stacked and fastened together. For example, as shown in FIG. 8, an example in which the part at which the head end 52a and the tail end 52b are connected is located at the first end 50a of the conductive member 50 is used. The head end 52a and the tail end 52b of the conductive thin film 52 are at least partially stacked in the telescopic direction (z direction), that is, projection of the head end 52a in the telescopic direction at least partially overlaps projection of the tail end 52b in the telescopic direction. In this way, there is a large contact area between the head end 52a and the tail end 52b. This helps improve the stability of the connection between the head end 52a and the tail end 52b of the conductive thin film 52, and improves reliability of the conductive member 50.

Certainly, in some examples, the head end 52a and the tail end 52b of the conductive thin film 52 may alternatively be aligned and spliced together, so that the head end 52a and the tail end 52b are not stacked. For example, before the conductive member 50 is formed by using the conductive thin film 52 (refer to FIG. 7), a surface that is of the head end 52a of the conductive thin film 52 and that is away from the tail end 52b in the telescopic direction is an end surface of the head end 52a, and a surface that is of the tail end 52b of the conductive thin film 52 and that is away from the head end 52a in the telescopic direction is used as an end surface of the tail end 52b. The end surface of the head end 52a and the end surface of the tail end 52b of the conductive thin film 52 are attached and fastened together to form the conductive member 50, so that projection of the head end 52a and the tail end 52b of the conductive thin film 52 in the telescopic direction do not overlap, and the part at which the head end 52a and the tail end 52b are connected may form a plane.

It may be understood that the part at which the head end 52a and the tail end 52b of the conductive thin film 52 are connected is located at the first end 50a of the conductive member 50. For example, all of the head end 52a and all of the tail end 52b of the conductive thin film 52 may be connected to jointly form the first end 50a of the conductive member 50, or a part of the head end 52a and a part of the tail end 52b may be connected to jointly form the first end 50a of the conductive member 50.

The head end 52a and the tail end 52b of the conductive thin film 52 are stacked, and vertical projection of the head end 52a in the telescopic direction at least partially overlaps vertical projection of the tail end 52b in the telescopic direction, and an overlapping part may be an overlapping region between the head end 52a and the tail end 52b, for example, an overlapping region S shown in FIG. 8. The overlapping region between the head end 52a and the tail end 52b may alternatively be located at the first end 50a of the conductive member 50.

Vertical projection of the overlapping region between the head end 52a and the tail end 52b in the telescopic direction (z direction) may coincide with vertical projection of the second end 50b of the conductive member 50 in the telescopic direction. This reduces or avoids a thickness mismatch between film layers at a lower part of the second end 50b (side facing away from the flexible display 20 in the telescopic direction) of the conductive member 50, so that when the conductive member 50 is compressed to the extreme extent, thicknesses of the film layers at the lower part the second end of 50b the conductive member 50 are consistent, and the film layers are both film layers at which the head end 52a and the tail end 52b are stacked. This better helps ensure that the tactile feeling does not change when the conductive region is slid over by the touch operation, and improve user experience.

For example, the head end 52a and the tail end 52b of the conductive thin film 52 may be connected through bonding, to enclose the conductive member 50. For example, the head end 52a and the tail end 52b of the conductive thin film 52 are stacked. Refer to FIG. 8. The conductive member 50 may further include an adhesive layer 53, and the adhesive layer 53 may be located between the head end 52a and the tail end 52b, so that the head end 52a and the tail end 52b may be connected and fastened together via the adhesive layer 53.

It may be understood that, before the conductive thin film 52 encloses the conductive member 50, adhesive may be applied to the head end 52a and/or the tail end 52b of the conductive thin film 52. When the conductive thin film 52 encloses the conductive member 50, the head end 52a and the tail end 52b are stacked, and the head end 52a and the tail end 52b are bonded together by applying the adhesive. The adhesive layer 53 is formed between the head end 52a and the tail end 52b.

Certainly, in some other examples, the head end 52a and the tail end 52b of the conductive thin film 52 may alternatively be connected in another manner to enclose the conductive member 50. For example, the head end 52a and the tail end 52b may be connected through welding, fastening by using a fastener, clamping, or the like.

To separately fasten and electrically connect the conductive member 50 to the housing 10 and the flexible display 20, as shown in FIG. 8, the conductive member 50 may further include a first conductive adhesive layer 54 and a second conductive adhesive layer 55, and the first conductive adhesive layer 54 is located between the first end 50a of the conductive member 50 and the housing 10. For example, the first conductive adhesive layer 54 may be disposed on a surface that is of the first end 50a of the conductive member 50 and that faces away from the cavity 51, and the first end 50a of the conductive member 50 may be electrically connected to the housing 10 via the first conductive adhesive layer 54, to implement fastening and electrical connection between the conductive member 50 and the housing 10.

The second conductive adhesive layer 55 may be located between the second end 50b of the conductive member 50 and the flexible display 20. For example, the second conductive adhesive layer 55 may be disposed on a surface that is of the second end 50b of the conductive member 50 and that faces away from the cavity 51, and the second end 50b of the conductive member 50 may be electrically connected to the flexible display 20 via the second conductive adhesive layer 55, to implement fastening and electrical connection between the conductive member 50 and the flexible display 20. A connection structure is simple, is easy to implement, and has low costs.

In this embodiment of this application, the conductive thin film 52 may be of a flexible and conductive thin-layer structure. For example, the conductive thin film 52 may be of a single-layer structure. For example, the conductive thin film 52 may be of a flexible thin-layer structure formed by a conductive material having electrical conductivity. For example, the conductive thin film 52 may be a metal thin film. For example, the conductive thin film 52 may be a metal foil, for example, may include but is not limited to a copper foil or an aluminum foil.

Alternatively, the conductive thin film 52 may be of a single-layer thin-layer structure that is conductively modified. For example, the conductive thin film 52 may be a conductive fabric, and a molding material of the conductive fabric may include polyester and conductive fibers. For example, by carbonizing the conductive fiber or by mixing the conductive fiber with carbon black and fiber substances, the carbon black forms a continuous structure on the fiber, which can endow the fiber with electrical conductivity. The conductive fabric formed by using the polyester and the conductive fiber as raw materials may be flexible and conductive.

The conductive member 50 is formed by using a thin-layer structure like the conductive metal thin film or the conductive fabric. For example, the head end 52a and the tail end 52b of the metal thin film or the conductive fabric are connected to enclose the conductive member 50 having the cavity 51 inside, to meet requirements of extension and retraction and conduction of the conductive member 50. A structure design is simple and assembly is easy to implement, which helps improve assembly efficiency and reduce production costs. In addition, the conductive thin film 52 includes the conductive fabric, so that costs are low, and production implementation is facilitated.

FIG. 9 is a diagram of a cross-sectional structure of another conductive member according to an embodiment of this application.

In some examples, the conductive thin film 52 may alternatively be of a multi-layer structure. For example, the conductive thin film 52 may include a flexible film layer 521 and a conductive layer 522. The conductive layer 522 is disposed on a surface that is of the flexible film layer 521 and that faces away from the cavity 51, and the conductive layer 522 extends from at least the first end 50a to the second end 50b of the conductive member.

The flexible film layer 521 is flexible. This can provide flexibility for the conductive thin film 52 to implement extension and retraction of the conductive member 50. The conductive layer 522 is conductive. This can provide electrical conductivity for the conductive thin film 52, so that the first end 50a and the second end 50b of the conductive member 50 are electrically connected to the housing 10 and the flexible display 20. A structure design of the conductive thin film 52 is enriched, so that the conductive member 50 has better structure flexibility, and this helps extend an application scope of the conductive member 50.

It should be noted that the conductive layer 522 may cover only a part of the flexible film layer 521, provided that the electrical connection between the first end 50a and the second end 50b of the conductive member 50 can be met. This helps reduce costs.

Alternatively, the conductive layer 522 is located on the surface that is of the flexible film layer 521 and that faces away from the cavity 51, and the conductive layer 522 may completely cover the surface that is of the flexible film layer 521 and that faces away from the cavity 51. This keeps thicknesses of the entire conductive thin film 52 consistent, and better helps implement effect that the tactile feeling does not change abnormally when the conductive region is slid over by the touch operation.

The flexible film layer 521 may be of a thin layer structure without electrical conductivity. For example, the flexible film layer 521 may include but is not limited to a flexible fabric, a polyimide (polyimide, PI for short) film, or the like.

A molding material of the conductive layer 522 may include a conductive material, for example, may include a metal material. For example, the conductive layer 522 may be a metal plating layer, and the conductive layer 522 may include but is not limited to a gold plating layer, a nickel plating layer, a tin plating layer, or the like.

For example, the flexible film layer 521 may be a PI film, the conductive layer 522 may be a gold plating layer, and the conductive thin film 52 may be a gold plating PI film. Alternatively, the conductive layer 522 may be a nickel plating layer, and the conductive thin film 52 may be a nickel plating PI film. Alternatively, the conductive layer 522 may be a tin plating layer, and the conductive thin film 52 may be a tin plating PI film or the like.

Certainly, in some examples, the flexible film layer 521 may alternatively be of a thin layer structure with electrical conductivity. For example, the flexible film layer 521 may alternatively be a metal thin film, a conductive fabric, or the like.

In some examples, the molding material of the conductive layer 522 may further include an adhesive material. For example, the conductive layer 522 may be an adhesive layer including conductive adhesive, and a molding material of the conductive adhesive may include resin and a conductive material. For example, the resin may include epoxy resin, acrylate resin, polyurethane, and the like, and the conductive material may include a metal material, for example, a silver particle or a copper particle.

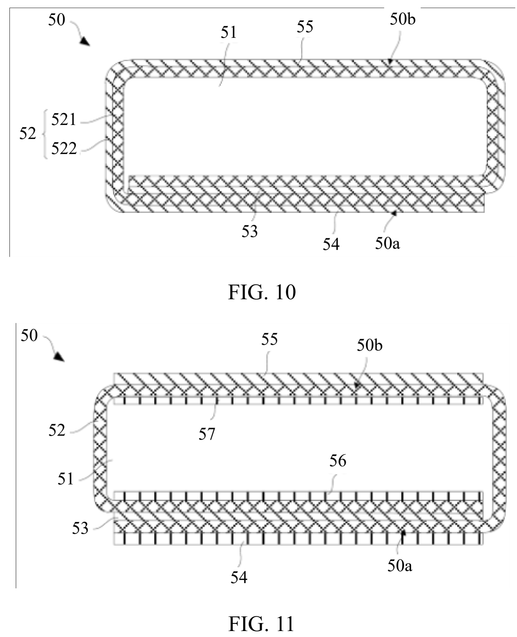

FIG. 10 is a diagram of a cross-sectional structure of still another conductive member according to an embodiment of this application.

The conductive layer 522 may include a conductive adhesive, and is conductive and adhesive. The conductive layer 522 may be directly bonded to the flexible film layer 521 to form the conductive thin film 52. When the head end 52a and the tail end 52b of the conductive thin film 52 are connected to form the conductive member 50, the conductive layer 522 (conductive adhesive) is located on the surface that is of the flexible film layer 521 and that faces away from the cavity 51, and the head end 52a and the tail end 52b may be bonded together by using a part of the conductive adhesive (conductive layer 522). In other words, the part of the conductive adhesive may form the adhesive layer 53 located between the head end 52a and the tail end 52b.

The conductive adhesive (conductive layer 522) located at the first end 50a of the conductive member 50 may also be directly bonded and fastened to the housing 10, to implement fastening and electrical connection between the first end 50a of the conductive member 50 and the housing 10. In other words, a part of the conductive adhesive may form the first conductive adhesive layer 54 between the conductive member 50 and the housing 10.

The conductive adhesive (conductive layer 522) located at the second end 50b of the conductive member 50 may also be directly bonded and fastened to the flexible display 20, to implement fastening and electrical connection between the second end 50b of the conductive member 50 and the flexible display 20. In other words, a part of the conductive adhesive may form the second conductive adhesive layer 55 between the conductive member 50 and the flexible display 20.

To be specific, when the conductive member 50 is formed by using the conductive thin film 52, the head end 52a and the tail end 52b of the conductive thin film 52 may be bonded by using the conductive adhesive (conductive layer 522) included in the conductive thin film 52, and the conductive member 50 may also be directly bonded and fastened to the housing 10 and the flexible display 20 by using the conductive adhesive. There is no need to additionally dispose an adhesive layer and a conductive adhesive layer, a manner of forming and operating the conductive member 50 is simple, forming difficulty and costs are low, and production is easy to implement.

It may be understood that the conductive adhesive, as the conductive layer 522, may form the conductive thin film 52 with the conductive flexible film layer 521. For example, the flexible film layer 521 may be a metal thin film, a conductive fabric, or the like.

Alternatively, the conductive layer 522 may form the conductive thin film 52 with the flexible film layer 521 that is not conductive. For example, the flexible film layer 521 may be a flexible fabric, a PI film, or the like.

FIG. 11 is a diagram of a cross-sectional structure of yet another conductive member according to an embodiment of this application.

In some examples, the conductive thin film 52 located at the first end 50a of the conductive member 50 may have a first through hole (not shown in the figure), and the conductive thin film 52 located at the second end 50b of the conductive member 50 may have a second through hole (not shown in the figure).

For example, in an example in which the conductive thin film 52 includes a conductive fabric, the conductive fabric is woven by fibers, and a gap between the fibers enables the through hole to be formed on the conductive fabric. After the head end 52a and the tail end 52b of the conductive fabric are connected to form the conductive member 50, a fiber gap of a part of the conductive fabric located at the first end 50a may form the first through hole, and a fiber gap of a part of the conductive fabric located at the second end 50b may form the second through hole.

It may be understood that the fiber gaps of the conductive fabric are usually evenly distributed in an array. After the conductive member 50 is enclosed by using the conductive fabric, the fiber gaps may be evenly distributed on the entire conductive member 50, a fiber gap located at the first end 50a may be the first through hole, and the fiber gap located at the second end 50b may be the second through hole.

Certainly, in some examples, only the conductive thin film 52 (conductive fabric) located at the first end 50a may have the first through hole, and the conductive thin film 52 located at the second end 50b may have the second through hole.

Refer to FIG. 11. The first conductive adhesive layer 54 is disposed on the surface that is of the first end 50a of the conductive member 50 and that faces away from the cavity 51, and the adhesive layer 53 is further disposed between the head end 52a and the tail end 52b that form the first end 50a. When the conductive member 50 is compressed to the extreme extent in the scenario like the touch operation, an adhesive overflow problem occurs on the adhesive layer 53 and the first conductive adhesive layer 54 under pressing. For example, the adhesive overflows, via the first through hole, to the side that is of the first end 50a of the conductive member 50 and that faces the cavity 51 (second end 50b). As a result, the first end 50a of the conductive member 50 and the second end 50b are likely to be bonded together by using the overflowed adhesive. It is inconvenient to reset the second end 50b of the conductive member 50 and the flexible display 20 after pressing is removed. This causes a defect like a local dent of the flexible display 20, and affects the flatness.

Correspondingly, the second conductive adhesive layer 55 is disposed on the surface that is of the second end 50b of the conductive member 50 and that faces away from the cavity 51. In the touch operation scenario, under pressing, the second conductive adhesive layer 55 is likely to overflow, via the second through hole, to the side that is of the second end 50b of the conductive member 50 and that faces the cavity 51 (first end 50a). A problem that the first end 50a and the second end 50b are bonded together by using the overflowed adhesive also occurs, and the flatness is affected.

Therefore, in this example, as shown in FIG. 11, the conductive member 50 may further include a first anti-penetration layer 56. The first anti-penetration layer 56 may be disposed on a surface that is of the first end 50a and that faces the cavity 51, the first anti-penetration layer 56 and the first conductive adhesive layer 54 are located on two opposite surfaces of the first end 50a in the telescopic direction, and the first anti-penetration layer 56 may be disposed on a surface that is of a part of the conductive thin film 52 forming the first end 50a and that faces the cavity 51.

The first anti-penetration layer 56 covers the first through hole. This can prevent the first conductive adhesive layer 54 and the adhesive layer 53 from overflowing, via the first through hole, to the side that is of the first end 50a and that faces the cavity 51, avoid a problem of bonding between the first end 50a and the second end 50b when the conductive member 50 is compressed to the extreme extent, and improve the flatness of the flexible display 20.

Correspondingly, the conductive member 50 may further include a second anti-penetration layer 57. The second anti-penetration layer 57 may be disposed on a surface that is of the second end 50b and that faces the cavity 51, the second anti-penetration layer 57 and the second conductive adhesive layer 55 are located on two opposite surfaces of the second end 50b in the telescopic direction, and the second anti-penetration layer 57 may be disposed on a surface that is of a part of the conductive thin film 52 forming the second end 50b and that faces the cavity 51.

The second anti-penetration layer 57 covers the second through hole. This can prevent the second conductive adhesive layer 55 from overflowing, via the second through hole, to the side that is of the second end 50b and that faces the cavity 51, and can also avoid the problem of bonding between the first end 50a and the second end 50b when the conductive member 50 is compressed to the extreme extent.

It may be understood that, in an example in which the conductive member 50 is enclosed by the conductive thin film 52 without a through hole, for example, in an example in which the conductive member 50 is formed by a metal thin film without a through hole and a PI film without a through hole, the first anti-penetration layer 56 and the second anti-penetration layer 57 may not be disposed, so that disposing of the anti-penetration layer is omitted. This helps simplify forming steps and reduce production costs.

For example, the conductive thin film 52 is a single-layer conductive fabric. During actual assembly implementation, the conductive fabric may be first cut into a strip-shaped structure with a specific width, the first anti-penetration layer 56 and the second anti-penetration layer 57 are disposed in corresponding positions of the conductive fabric, and adhesive is applied to at least one side of the head end 52a and the tail end 52b of the conductive fabric. Then, the conductive fabric is folded to enclose the conductive member 50 having the cavity 51 inside, so that the head end 52a and the tail end 52b are bonded together via the adhesive layer 53 formed by applying the adhesive, the first anti-penetration layer 56 is disposed on the surface that is of the first end 50a of the conductive member 50 and that faces the cavity 51, and the second anti-penetration layer 57 is disposed on the surface that is of the second end 50b of the conductive member 50 and that faces the cavity 51. Finally, the first conductive adhesive layer 54 is formed on the surface that is of the first end 50a of the conductive member 50 and that faces away from the cavity 51, so that the conductive member 50 is fastened to the housing via the first conductive adhesive layer 54. The second conductive adhesive layer 55 is formed on the surface that is of the second end 50b of the conductive member 50 and that faces away from the cavity 51, so that the flexible display is bonded to the second conductive adhesive layer 55. The flexible display is pressed, the conductive member 50 is pressed via the flexible display, and the flexible display, the second conductive adhesive layer 55, the conductive member 50, the first conductive adhesive layer 54, and the housing are fully squeezed and bonded, so that the conductive member 50, the housing, and the flexible display are assembled.

Certainly, in some other examples, the conductive member may alternatively be of another type of telescopic conductive structure having a cavity between two ends in a telescopic direction. For example, the conductive member may include two rigid conductive sheets and a flexible conductive thin film. The two conductive sheets may be located on two sides of the conductive thin film, and the two conductive sheets are spaced and are electrically connected via the conductive thin film. The two conductive sheets respectively form a first end and a second end of the conductive member, and a spacing between the two conductive sheets forms a cavity. One conductive sheet may be electrically connected to the flexible display, and the other conductive sheet may be electrically connected to the housing. The flexible conductive thin film may enable the two conductive sheets to move relative to each other to implement extension and retraction of the conductive member, and the conductive member extends and retracts and compresses the cavity between the conductive sheets, so that a crack on the flexible display can be avoided while reliable electrical connection between the flexible display and the housing is ensured, and the problem like the abnormal change in the tactile feeling during the touch operation is avoided.

In the descriptions of embodiments of this application, it should be noted that, unless otherwise clearly specified and limited, terms "mounted", "connected", and "connection" should be understood in a broad sense. For example, the terms may be used for fastened connection, may be indirect connection through an intermediate medium, may be internal connection between two elements, or an interaction relationship between two elements. A person of ordinary skill in the art may understand specific meanings of the foregoing terms in embodiments of this application based on a specific situation. Terms such as "first", "second", "third", "fourth", and the like (if any) are intended to distinguish between similar objects but do not necessarily indicate a specific order or sequence.

Finally, it should be noted that the foregoing embodiments are merely intended for describing the technical solutions of embodiments of this application other than limiting embodiments of this application. Although embodiments of this application are described in detail with reference to the foregoing embodiments, a person of ordinary skill in the art should understand that modifications may still be made to the technical solutions described in the foregoing embodiments or equivalent replacements may be made to a part of or all technical features thereof, without departing from the scope of the technical solutions of embodiments of this application.

## Claims

1. An electronic device, comprising:
a housing;
a flexible display, wherein the flexible display is disposed on the housing; and
a telescopic conductive member, wherein the conductive member is located between the housing and the flexible display, the conductive member has a first end and a second end that are opposite to each other in a telescopic direction, and the first end and the second end are electrically connected to the housing and the flexible display respectively, wherein
the conductive member has a cavity, the cavity is located between the first end and the second end, and the flexible display is configured to drive, via the second end, the conductive member to extend or retract, to compress or expand the cavity.

2. The electronic device according to claim 1, wherein a groove is disposed on a surface that is of the housing and that faces the flexible display, and the first end of the conductive member is disposed in the groove.

3. The electronic device according to claim 2, wherein when the conductive member is in a retracted state, the first end of the conductive member is attached to the second end, and a surface that is of the second end and that faces away from the first end is aligned with the surface that is of the housing and that faces the flexible display.

4. The electronic device according to any one of claims 1 to 3, wherein the conductive member is of a ring-shaped structure having the cavity inside.

5. The electronic device according to any one of claims 1 to 3, wherein the conductive member comprises a flexible conductive thin film, the conductive thin film encloses the cavity, a part of the conductive thin film forms the first end, and a part of the conductive thin film forms the second end.

6. The electronic device according to claim 5, wherein the conductive thin film has a head end and a tail end in an extension direction, and the head end and the tail end of the conductive thin film are connected to enclose the cavity.

7. The electronic device according to claim 6, wherein a part that is of the conductive thin film and at which the head end and the tail end are connected is located at the first end or the second end of the conductive member.

8. The electronic device according to claim 7, wherein the head end and the tail end of the conductive thin film are at least partially stacked in the telescopic direction.

9. The electronic device according to claim 8, wherein an overlapping region between the head end and the tail end is located at the first end of the conductive member, and vertical projection of the overlapping region between the head end and the tail end in the telescopic direction coincides with vertical projection of the second end of the conductive member in the telescopic direction.

10. The electronic device according to claim 6, further comprising an adhesive layer, wherein the adhesive layer is located between the head end and the tail end.

11. The electronic device according to claim 10, further comprising a first conductive adhesive layer, wherein the first conductive adhesive layer is located between the first end of the conductive member and the housing, and the first end is electrically connected to the housing via the first conductive adhesive layer; and
the electronic device further comprises a second conductive adhesive layer, wherein the second conductive adhesive layer is located between the second end of the conductive member and the flexible display, and the second end is electrically connected to the flexible display via the second conductive adhesive layer.

12. The electronic device according to claim 11, wherein the conductive thin film comprises a conductive fabric and a metal thin film.

13. The electronic device according to claim 12, wherein the conductive thin film comprises a flexible film layer and a conductive layer, the conductive layer is disposed on a surface that is of the flexible film layer and that faces away from the cavity, and the conductive layer extends from at least the first end to the second end of the conductive member.

14. The electronic device according to claim 13, wherein the conductive layer completely covers the surface that is of the flexible film layer and that faces away from the cavity.

15. The electronic device according to claim 14, wherein the conductive layer comprises a conductive adhesive, a part of the conductive adhesive forms the first conductive adhesive layer, a part of the conductive adhesive forms the second conductive adhesive layer, and a part of the conductive adhesive forms the adhesive layer.

16. The electronic device according to any one of claims 13 to 15, wherein the flexible film layer comprises a conductive fabric, a metal thin film, and a polyimide film.

17. The electronic device according to any one of claims 11 to 15, wherein the conductive thin film located at the first end has a first through hole; and
the electronic device further comprises a first anti-penetration layer, the first anti-penetration layer is disposed on a surface that is of the first end and that faces the cavity, and the first anti-penetration layer covers the first through hole.

18. The electronic device according to claim 14 or 15, wherein the conductive thin film located at the second end has a second through hole; and
the electronic device further comprises a second anti-penetration layer, the second anti-penetration layer is disposed on a surface that is of the second end and that faces the cavity, and the second anti-penetration layer covers the second through hole.

19. The electronic device according to any one of claims 1 to 3, wherein the housing comprises at least a first middle frame and a second middle frame;
the electronic device further comprises a hinge component, the first middle frame and the second middle frame are located on two sides of the hinge component, and the first middle frame and the second middle frame are rotatably connected via the hinge component; and
the flexible display is disposed on a side surface of the first middle frame, the second middle frame, and the hinge component.
